# EUROPEAN PATENT APPLICATION

(11) **EP 4 571 585 A1**
(43) Date of publication of application: **18.06.2025**
(21) Application number: 24223458.1
(22) Date of filing: 27.12.2024
(51) Int. Cl.: G06N 3/063, G06N 3/0464, G06N 3/098

(54) **METHOD AND APPARATUS FOR PROCESSING NEURAL NETWORK FEATURE MAP USING NEURAL NETWORK PROCESSOR, AND DEVICE**

(30) Priority: 29.12.2023 CN 202311867567
(71) Applicant: Beijing Horizon Information Technology Co., Ltd., Beijing 100094 (CN)
(72) Inventor: HE, Yibo, Beijing, 100094 (CN); XIAO, Lei, Beijing, 100094 (CN)
(74) Representative: Epping - Hermann - Fischer

(57) **Abstract**

Embodiments of the present disclosure disclose a method and an apparatus for processing a neural network feature map using a neural network processor, and a device. The method includes: determining an operation instruction for calculating a to-be-processed feature map; determining pause state information of an operation unit in the neural network processor for executing the operation instruction; adjusting, based on the pause state information, a first pause parameter of the operation unit for executing the operation instruction to determine an adjusted second pause parameter; and controlling, based on the second pause parameter, the operation unit to execute the operation instruction to obtain a processing result corresponding to the to-be-processed feature map. According to the embodiments of the present disclosure, the first pause parameter can be adjusted, so that time distribution and/or spatial distribution for the operation unit to pause operations become more balanced.

## Description

### FIELD OF THE INVENTION

The present disclosure relates to artificial intelligence technologies, and in particular, to a method and an apparatus for processing a neural network feature map using a neural network processor, and a device.

### BACKGROUND OF THE INVENTION

In the field of artificial intelligence technologies, requirements for bandwidth of operations of different neural network models may vary greatly. For example, requirements for bandwidth of convolution operations of different neural network models may vary greatly. When a neural network feature map is operated through an operation circuit (which is also referred to as an operation unit or a tensor calculation circuit) of a neural network processor, a case where an operation is passively paused due to limitations in input and output bandwidth, or a case of waiting for operation results of other operation circuits because the operation circuit has data dependence on the other operation circuits may easily occur. However, a long-term operation pause of the operation circuit may cause poor balance in power consumption distribution, which easily leads to problems in power integrity.

### SUMMARY OF THE INVENTION

To resolve the foregoing technical problems such as poor balance in power consumption distribution, embodiments of the present disclosure provide a method, and an apparatus for processing a neural network feature map by a neural network processor, and a device, so as to improve the balance in power consumption distribution.

According to a first aspect of the present disclosure, a method for processing a neural network feature map by a neural network processor is provided, including: determining an operation instruction for calculating a to-be-processed feature map; determining pause state information of an operation unit in the neural network processor for executing the operation instruction; adjusting, based on the pause state information, a first pause parameter of the operation unit for executing the operation instruction to determine an adjusted second pause parameter; and controlling, based on the second pause parameter, the operation unit to execute the operation instruction to obtain a processing result corresponding to the to-be-processed feature map.

According to a second aspect of the present disclosure, an apparatus for processing a neural network feature map by a neural network processor is provided, including: a determining module, configured to determine an operation instruction for calculating a to-be-processed feature map; a first processing module, configured to determine pause state information of an operation unit in the neural network processor for executing the operation instruction; a second processing module, configured to adjust, based on the pause state information, a first pause parameter of the operation unit for executing the operation instruction to determine an adjusted second pause parameter; and a third processing module, configured to control, based on the second pause parameter, the operation unit to execute the operation instruction to obtain a processing result corresponding to the to-be-processed feature map.

According to a third aspect of the present disclosure, a computer readable storage medium is provided. The storage medium stores a computer program for executing the method for implementing the method for processing a neural network feature map using a neural network processor according to any one of the foregoing embodiments of the present disclosure.

According to a fourth aspect of the present disclosure, an electronic device is provided. The electronic device includes: a processor; and a memory for storing processor-executable instructions, wherein the processor is configured to read the executable instructions from the memory, and execute the instructions to implement the method for processing a neural network feature map by a neural network processor according to any one of the foregoing embodiments of the present disclosure; or the electronic device includes the apparatus for processing a neural network feature map by a neural network processor according to any one of the foregoing embodiments of the present disclosure.

According to a fifth aspect of the present disclosure, a computer program product is provided. When instructions in the computer program product are executed by a processor, the method for processing a neural network feature map by a neural network processor according to any one of the foregoing embodiments of the present disclosure is implemented.

Based on the method and apparatus for processing a neural network feature map using a neural network processor, and a device that are provided in the foregoing embodiment of the present disclosure, when processing the neural network feature map using the neural network processor, the operation instruction for calculating the to-be-processed feature map is determined, and the pause state information of each operation unit in the neural network processor for executing the operation instruction is determined. Subsequently, the first pause parameter in the pause state information of each operation unit is adjusted to determine the adjusted second pause parameter. Based on the second pause parameter, each operation unit is controlled to execute the operation instruction to obtain the processing result corresponding to the to-be-processed feature map. The second pause parameter is obtained by adjusting the first pause parameter. The second pause parameter may make time distribution and/or spatial distribution for the operation unit to pause operations more balanced, thereby reducing amplitude and duration of each drastic change in power consumption. In this way, overall pause time distribution of the operation unit of the neural network processor is more balanced, thereby improving the balance in the power consumption distribution of the neural network processor, which helps to alleviate or resolve problems in power integrity.

### BRIEF DESCRIPTION OF THE DRAWINGS

FIG. 1 shows an exemplary application scenario of a method for processing a neural network feature map using a neural network processor according to the present disclosure;
FIG. 2 is a schematic flowchart of a method for processing a neural network feature map using a neural network processor according to an exemplary embodiment of the present disclosure;
FIG. 3 is a schematic flowchart of a method for processing a neural network feature map using a neural network processor according to another exemplary embodiment of the present disclosure;
FIG. 4 is a schematic diagram of power consumption distribution adjusted in a time dimension according to an exemplary embodiment of the present disclosure;
FIG. 5 is a schematic flowchart of a method for processing a neural network feature map using a neural network processor according to still another exemplary embodiment of the present disclosure;
FIG. 6 is a schematic flowchart of a method for processing a neural network feature map using a neural network processor according to yet another exemplary embodiment of the present disclosure;
FIG. 7 is a schematic flowchart of a method for processing a neural network feature map using a neural network processor according to still yet another exemplary embodiment of the present disclosure;
FIG. 8 is a schematic diagram of a spatial dimension adjustment principle according to an exemplary embodiment of the present disclosure;
FIG. 9 is a schematic diagram of power consumption distribution adjusted on a spatial dimension according to an exemplary embodiment of the present disclosure;
FIG. 10 is a schematic flowchart of a method for processing a neural network feature map using a neural network processor according to a further exemplary embodiment of the present disclosure;
FIG. 11 is a schematic flowchart of a method for processing a neural network feature map using a neural network processor according to a still further exemplary embodiment of the present disclosure;
FIG. 12 is a schematic diagram of a control principle of an operation unit according to an exemplary embodiment of the present disclosure;
FIG. 13 is a schematic diagram of a structure of an apparatus for processing a neural network feature map using a neural network processor according to an exemplary embodiment of the present disclosure;
FIG. 14 is a schematic diagram of a structure of an apparatus for processing a neural network feature map using a neural network processor according to another exemplary embodiment of the present disclosure;
FIG. 15 is a schematic diagram of a structure of an apparatus for processing a neural network feature map using a neural network processor according to still another exemplary embodiment of the present disclosure; and
FIG. 16 is a diagram of a structure of an electronic device according to an embodiment of the present disclosure.

### DETAILED DESCRIPTION OF THE EMBODIMENTS

To explain the present disclosure, exemplary embodiments of the present disclosure will be described in detail below with reference to accompanying drawings. Obviously, the described embodiments are only a part of, rather than all of the embodiments of the present disclosure. It should be understood that the present disclosure is not limited to the exemplary embodiments.

It should be noted that unless otherwise specified, the scope of the present disclosure is not limited by relative arrangement, numerical expressions, and numerical values of components and steps described in these embodiments.

### SUMMARY OF THE DISCLOSURE

In the process of implementing the present disclosure, the inventors finds that in the field of artificial intelligence technologies, requirements for bandwidth of operations of different neural network models may vary greatly. For example, requirements for bandwidth of convolution operations of different neural network models may vary greatly. When a neural network feature map is operated through an operation circuit (which is also referred to as an operation unit or a tensor calculation circuit) of a neural network processor, a case where an operation is passively paused due to limitations in input and output bandwidth, or a case of waiting for operation results of other operation circuits because the operation circuit has data dependence on the other operation circuits may easily occur. However, a long-term operation pause of the operation circuit may cause poor balance in power consumption distribution, which easily leads to problems in power integrity.

### Exemplary Overview

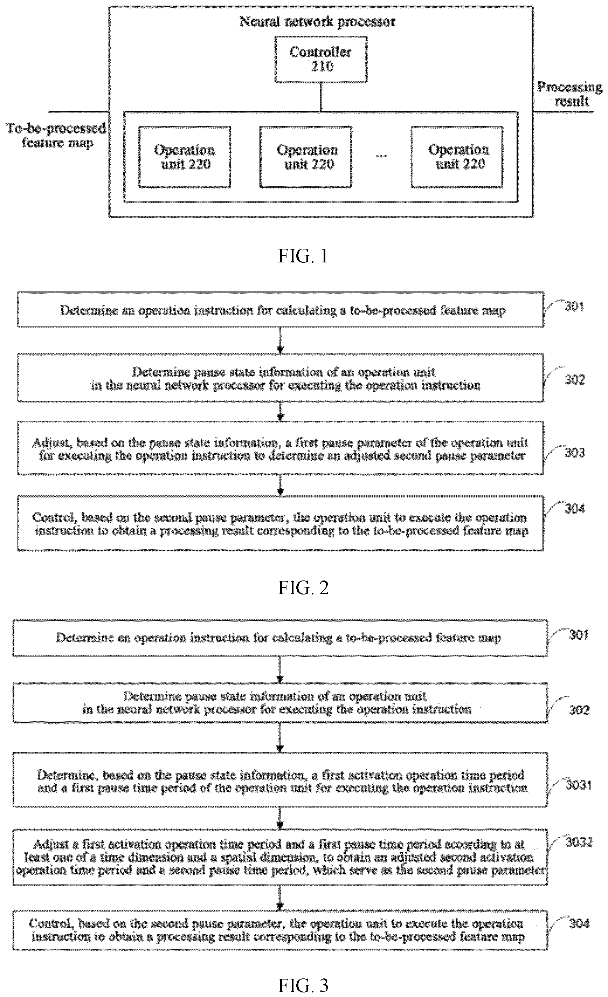

FIG. 1 shows an exemplary application scenario of a method for processing a neural network feature map by a neural network processor according to the present disclosure. As shown in FIG. 1, the neural network processor may include a controller 210 and at least one operation unit 220. The controller 210 is configured to control operation of the operation unit 220. For example, the controller 210 activates the operation unit 220 to make the operation unit 220 enter a working state, and controls the operation unit 220 to execute an operation instruction to complete a corresponding operation. The operation unit 220 may include a multiply-accumulate array (MAC_ARRAY) operation unit, a multiply-accumulate post-processing (MAC_PP) operation unit, and the like. The multiply-accumulate array operation unit may be used to complete multiply-accumulate operations such as a convolution operation and a matrix multiplication operation. The multiply-accumulate post-processing operation unit may be used to complete post-processing operations after the multiply-accumulate operations. For example, in a neural network model, a convolution result is added to features of a skip connection. The neural network processor may also include a memory and other related components (which are not shown in FIG. 1). For example, the memory may store a to-be-processed feature map, an operation instruction, weight data, and the like. By using the method for processing a neural network feature map using a neural network processor (which may be implemented in the controller 210) in the present disclosure, an operation instruction for calculating the to-be-processed feature map may be determined, and pause state information of the operation unit 220 in the neural network processor to execute the operation instruction may be determined. A first pause parameter of the operation unit 220 to execute the operation instruction may be adjusted based on the pause state information, to determine an adjusted second pause parameter. The operation unit 220 is controlled based on the second pause parameter to execute the operation instruction to obtain a processing result corresponding to the to-be-processed feature map. According to the method in the present disclosure, the second pause parameter is obtained by adjusting the first pause parameter of the operation unit 220 to execute the operation instruction. The second pause parameter may make time distribution and/or spatial distribution for the operation unit 220 to pause operations more balanced, thereby reducing amplitude and duration of each drastic change in power consumption. In this way, overall pause time distribution of the operation unit of the neural network processor is more balanced, thereby improving balance in power consumption distribution of the neural network processor, which helps to alleviate or resolve problems in power integrity.

### Exemplary Method

FIG. 2 is a schematic flowchart of a method for processing a neural network feature map using a neural network processor according to an exemplary embodiment of the present disclosure. This embodiment may be applied to an electronic device, such as an in-vehicle computing platform or another terminal device with image processing requirements. As shown in FIG. 2, the following steps are included.

Step 301. Determine an operation instruction for calculating a to-be-processed feature map.

In some optional embodiments, the to-be-processed feature map may be a feature map to be operated by the neural network processor at any stage in a neural network model. The neural network model may include, for example, a target detection model, an image classification model, and a semantic segmentation model. The to-be-processed feature map may be, for example, any feature map on which a convolution operation is to be performed or a feature map on which a matrix multiplication operation is to be performed in the neural network model. The operation instruction refers to an instruction to be executed by the neural network processor to operate on the to-be-processed feature map. The operation instruction is obtained by compiling the neural network model, and may be deployed to a terminal device to realize accelerated inference of the model through the neural network processor. For example, the operation instruction may include an operation instruction corresponding to the convolution operation and an operation instruction corresponding to the matrix multiplication operation. The operation instruction may include one or more instructions. For example, the operation instruction corresponding to the convolution operation may include relevant information such as an address and a size of an input tensor (such as the to-be-processed feature map or some of tensors in the to-be-processed feature map), relevant information such as an address and a size of a convolution weight, an operation type (such as multiplication or addition), an operation cycle, and other operation-related information, so as to provide an operation unit with data required for the operation. The operation instruction also includes relevant information such as a storage address and a size of an output tensor, so as to store a tensor output from the operation and provide a corresponding operation result for subsequent processing. In this way, the operation unit of the neural network processor is enabled to execute the corresponding operation instruction to complete the operation on the to-be-processed feature map. The specific operation instruction is determined based on a specific operation in an actual scenario, which is not limited in the embodiment of the present disclosure.

In some optional embodiments of the present disclosure, the operation instruction of the to-be-processed feature map may be read from a storage space storing the operation instruction, so as to determine the operation instruction of the to-be-processed feature map.

Step 302, Determine pause state information of an operation unit in the neural network processor for executing the operation instruction.

In some optional embodiments, as shown in FIG. 1, the operation unit in the neural network processor may include one or more operation units. Usually, multiple operation units are included. Various operation units cooperate with each other to complete the operation on the to-be-processed feature map. Each operation unit may include at least one calculation array of a certain size. For example, the operation unit may include at least one multiply-accumulate array (MAC), and each multiply-accumulate array may complete a multiplication operation on an input feature value and a weight each time (that is, in each operation cycle) to obtain an operation result. For example, an input feature value 7 is represented in binary as 00000111, and a multiplication operation with a weight 00001011 is performed. The multiply-accumulate array uses the input feature value as a multiplier, and each bit is multiplied by each bit of the weight to obtain a calculation result (which may be referred to as a partial product) corresponding to each bit of the input feature value, and then the calculation result of each bit is compressed to obtain a multiplication result of the input feature value and the weight.

In some optional embodiments, the pause state information of the operation unit to execute the operation instruction means that after the operation unit enters a working state, due to factors such as data dependencies between operation units or limitations in input and output bandwidth, the operation unit needs to enter a pause state (for example, waiting for operation results of other operation units, waiting for new input data, and waiting to output a respective operation result) after performing operations for a period of time to obtain the respective operation result.

In some optional embodiments, the pause state information of the operation unit to execute the operation instruction may be determined based on the specific operation instruction. For example, execution time of each instruction may be determined based on the operation instruction, and an activation operation time period and a pause time period of the operation unit for executing the operation instruction may be determined based on the execution time of each instruction. The pause state information may include the activation operation time period and the pause time period of the operation unit for executing the operation instruction. For example, a moment when each operation unit enters the working state (which indicates that an operation can be performed but may not have been performed yet) from an idle state is an initial time point (such as a time point 0), an operation unit A is in an activation operation state when executing the operation instruction in a time period 0-t1, wherein t1 is a time point; and an operation unit B is in an activation operation state when executing the operation instruction in a time period 0- 12, wherein t2 is another time point. For example, t2 is greater than t1. If an operation result of the operation unit A needs to be synchronized with that of the operation unit B, the operation unit A needs to pause the operation after completing this operation and wait for the operation result of the operation unit B. In other words, the operation unit A is in the pause state in a time period t1-t2. For example, if the operation unit A includes 10 multiply-accumulate arrays and needs to calculate 100 multiplication operations, the 10 multiply-accumulate arrays require 10 calculation cycles (each multiply-accumulate array completes one multiplication operation in each calculation cycle) to complete calculation of the 100 multiplication operations. However, if another operation that needs to be synchronized requires 20 calculation cycles, these 10 multiply-accumulate arrays need to enter the pause state after completing operations of the 10 calculation cycles (these 10 calculation cycles may be referred to as a first activation operation time period), to wait for completion of the other operation. Based on this, the pause state information of each operation unit to execute the operation instruction can be obtained.

Step 303. Adjust, based on the pause state information, a first pause parameter of the operation unit for executing the operation instruction to determine an adjusted second pause parameter.

The first pause parameter is an original pause parameter of the operation unit that is determined based on the operation instruction. For example, the first pause parameter may include the first activation operation time period and a first pause time period for each operation unit to execute the operation instruction. For any operation unit, the first activation operation time period and the first pause time period of the operation unit are two time periods consecutive in time, and total duration of the two time periods may represent duration of the operation unit between start of a current operation task and start of a next operation task. For example, multiple operation units cooperate to complete the calculation of the to-be-processed feature map, and the current operation task of the operation unit A among the multiple operation units is to complete 100 multiplications. To synchronize with data of other operation units, or due to influence of input and output bandwidth, after starting the operation, the operation unit A completes the 100 multiplication operations in the first activation operation time period, and then enters the first pause time period. The operation unit A pause in the first pause time period and waits for the next operation task. The next operation task may continue to be processed according to a processing flow of the current operation task.

In some optional embodiments, the first activation operation time period may include a first starting time point and a first ending time point of an activation operation, and the first pause time period may include a second starting time point and a second ending time point of the pause. The time points herein may be relative time points. For example, an initial moment when the operation unit enters the activation operation state is the time point 0, the first starting time point of the first activation operation time period may be the time point 0, and the first ending time point of the first activation operation time period is a time point after duration of the first activation operation time period is delayed from the first starting time point. The second starting time point of the first pause time period may be the first ending time point of the first activation operation time period, at which the activation operation state ends and the pause state is entered. The second ending time point of the first pause time period is a time point after duration of the first pause time period is delayed from the second starting time point.

In some optional embodiments, the first activation operation time period and the first pause time period may also be represented by using operation cycles. For example, the first activation operation time period includes n operation cycles from 1 to n, and the first pause time period includes operation cycles from n+1 to N. For example, the first activation operation time period includes 10 operation cycles from 1 to 10, and the first pause time period includes 10 operation cycles from 11 to 20. Specific representation modes of the first activation operation time period and the first pause time period are not limited.

In some optional embodiments, for multiple operation units, each operation unit may correspond to a first pause parameter. The first pause parameters of some operation units may be adjusted based on the pause state information of the operation units to obtain adjusted second pause parameters. For example, according to a dependency relationship between the operation units, a target operation unit to be adjusted is determined from the operation units, and the first pause parameter of the target operation unit to execute the operation instruction is adjusted to obtain the adjusted second pause parameter of the target operation unit. Alternatively, it may also be considered that, the first pause parameter of the operation unit for executing the operation instruction is adjusted based on the pause state information. For the target operation unit to be adjusted, the adjusted pause parameter is used as the adjusted second pause parameter of the target operation unit. For an operation unit that does not need to be adjusted, the first pause parameter thereof is used as the adjusted second pause parameter. In some optional embodiments, an objective of adjusting the first pause parameter is to evenly disperse distribution of the pause time period of at least one of the operation units in time and space, so as to improve overall balance in power consumption distribution of the operation units. For example, the first pause parameter of the operation unit is adjusted from one continuous pause time period to at least two non-consecutive pause time periods. For example, the first pause parameter of the operation unit is to first activate the operation for a period of time (the first activation operation time period), and then pause for a period of time (the first pause time period). The first pause parameter is adjusted to first activate the operation for a period of time, then pause for a period of time, then activate the operation for a period of time, and then pause for a period of time, so that the adjusted second pause parameter is obtained. The second pause parameter includes two non-consecutive second activation operation time periods and two non-consecutive second pause time periods. To be specific, the first pause time period of the operation unit is adjusted to two non-consecutive second pause time periods, so that the overall balance in the power consumption distribution of the operation unit is effectively improved in a time dimension. For another example, the first pause parameter of the operation unit is adjusted to that some of subunits (which are, for example, referred to as first subunits) of the operation unit first activate the operation for a period of time. During this period of time, some other subunits (which are, for example, referred to as second subunits) of the operation unit are in a pause state. Subsequently, the first subunit enters the pause state, and the second subunit enters the activation operation state. In this way, the first subunit and the second subunit are alternately paused, and the power consumption distribution of the operation unit is balanced in space. The first pause parameter may also be adjusted in both the time dimension and a spatial dimension, so as to achieve balanced power consumption distribution of the operation unit.

In some optional embodiments, the first pause parameter of the operation unit may be adjusted based on the pause state information according to a certain adjustment principle, so as to obtain the adjusted second pause parameter.

In some optional embodiments, the adjustment principle may include a principle of adjusting according to the time dimension and a principle of adjusting according to the spatial dimension. The principle of adjusting according to the spatial dimension may include a principle of adjusting only according to the spatial dimension and a principle of adjusting according to both time and space. The principle of adjusting according to the time dimension may include: total duration of the activation operation time period and the pause time period in the adjusted second pause parameter is consistent with total duration of the first pause parameter, total pause duration of the adjusted second pause parameter is consistent with total pause duration of the first pause parameter, and total activation operation duration of the adjusted second pause parameter is consistent with total activation operation duration of the first pause parameter, so as to ensure that the operation unit can complete the current operation task within the total duration of the second pause parameter. For example, the first pause parameter includes a time period of 0-t, wherein total duration is t; the first activation operation time period is 0-t1; and the first pause time period is tl-t. The second pause parameter includes at least two non-consecutive second pause time periods. Taking two second pause time periods as an example, a second pause time period 1 is 0-t2, the second activation operation time period is t2-t3, and the second pause time period 2 is t3-t, wherein t3-t2=t1. The principle of adjusting according to the spatial dimension may include: The total duration of the adjusted second pause parameter is consistent with that of the first pause parameter (that is, total duration of the activation operation and the pause of each operation subunit divided according to the space is consistent with total duration of the first activation operation time period and the first pause time period); and in a case of balanced power consumption, it is ensured that the operation unit can complete the current operation task within the total duration of the second pause parameter. For example, the first activation operation time period of the operation unit A is 0-t1, and the first pause time period is t1-t. The operation unit A is divided into 2 operation subunits, wherein a second activation time period of an operation subunit 1 is 0-t1, and a second pause time period thereof is t1-t. A second pause time period of an operation subunit 2 is 0-t1, and a second activation time period thereof is tl-t.

In some optional embodiments, the adjustment principle may include: Total duration of the activation operation and the pause in the second pause parameter is consistent with that of the first pause parameter, and a total amount of operations of the operation unit in the second pause parameter is consistent with a total amount of operations in the first pause parameter. For example, using unit computing power (such as the multiply-accumulate array) in the operation unit for description, a sum of activation operation duration (or a number of operation cycles of the activation operation) of each multiply-accumulate array in the second pause parameter is same as a sum of activation operation duration (or a number of operation cycles of the activation operation) of each multiply-accumulate array in the first pause parameter. For example, the operation unit A includes 10 multiply-accumulate arrays. In the first pause parameter, a first activation operation time period of the 10 multiply-accumulate arrays includes 10 operation cycles, and the first pause time period includes 10 operation cycles. To be specific, the number of the operation cycles of the activation operation of each multiply-accumulate array is 10, and the sum of the number of the operation cycles of the activation operations of the multiply-accumulate arrays is 10 * 10 = 100, which is equivalent to that a number of operation cycles of an activation operation required for one multiply-accumulate array to complete the current operation task is 100. Taking spatial dimension adjustment as an example, in the second pause parameter, a second activation time period of 5 multiply-accumulate arrays includes 10 operation cycles from 1 to 10, and a second pause time period includes 10 operation cycles from 11 to 20. A second pause time period of the other 5 multiply-accumulate arrays includes 10 operation cycles from 1 to 10, and a second activation time period includes 10 operation cycles from 11 to 20, which satisfies 5 * 10+5 * 10 = 100. The current operation task can be completed within the total duration of the first pause parameter, and pause time of the operation unit is more evenly distributed in the spatial dimension.

In practical applications, the specific adjustment principle is not limited to the foregoing adjustment principles, and may be set according to actual requirements.

Step 304. Control, based on the second pause parameter, the operation unit to execute the operation instruction to obtain a processing result corresponding to the to-be-processed feature map.

After the second pause parameter of the operation unit is obtained, the operation unit is controlled based on the second pause parameter to execute the operation instruction to obtain the processing result corresponding to the to-be-processed feature map.

In some optional embodiments, for the second pause parameter obtained by balancing in the time dimension, the second pause parameter of at least one of the operation units includes at least two non-consecutive pause time periods, so that the activation operation and the pause of the operation units may be controlled based on the second pause parameter, thereby achieving balanced power consumption distribution in the time dimension, and improving balance in overall power consumption distribution of the operation unit.

In some optional embodiments, for the second pause parameter obtained by balancing in the spatial dimension, at least one of the operation units is spatially divided into multiple operation subunits. The second pause parameter of the operation unit includes second pause parameters respectively corresponding to the operation subunits, so that the multiple operation subunits may be controlled to pause alternately based on the second pause parameters respectively corresponding to the operation subunits of the operation unit, thereby achieving balanced power consumption distribution in the spatial dimension, and improving the balance in the overall power consumption distribution of the operation unit.

In some optional embodiments, for the second pause parameter obtained by balancing in both the time dimension and the spatial dimension, activation operations and pauses of the operation unit and multiple operation subunits of at least one operation unit may be controlled in the time dimension and the spatial dimension based on the second pause parameter, thereby achieving balanced power consumption distribution in the time dimension and the spatial dimension, and improving the balance of the overall power consumption distribution of the operation unit.

According to the method for processing a neural network feature map using a neural network processor provided in the embodiments of the present disclosure, when processing the neural network feature map using the neural network processor, the operation instruction for calculating the to-be-processed feature map is determined, and the pause state information of each operation unit in the neural network processor for executing the operation instruction is determined. Subsequently, the first pause parameter in the pause state information of each operation unit is adjusted to determine the adjusted second pause parameter. Based on the second pause parameter, each operation unit is controlled to execute the operation instruction to obtain the processing result corresponding to the to-be-processed feature map. The second pause parameter is obtained by adjusting the first pause parameter. The second pause parameter may make time distribution and/or spatial distribution for the operation unit to pause operations more balanced, thereby reducing amplitude and duration of each drastic change in power consumption. In this way, overall pause time distribution of the operation unit of the neural network processor is more balanced, thereby improving the balance in the power consumption distribution of the neural network processor, which helps to alleviate or resolve problems in power integrity.

FIG. 3 is a schematic flowchart of a method for processing a neural network feature map using a neural network processor according to another exemplary embodiment of the present disclosure.

In some optional embodiments, as shown in FIG. 3, step 303 of adjusting, based on the pause state information, the first pause parameter of the operation unit for executing the operation instruction to determine the adjusted second pause parameter includes the following steps.

Step 3031. Determine, based on the pause state information, a first activation operation time period and a first pause time period of the operation unit for executing the operation instruction.

The pause state information may include the first activation operation time period and the first pause time period of the operation unit for executing the operation instruction. Therefore, the first activation operation time period and the first pause time period of the operation unit for executing the operation instruction may be determined based on the pause state information.

Step 3032. Adjust the first activation operation time period and the first pause time period according to at least one of a time dimension and a spatial dimension, to obtain an adjusted second activation operation time period and a second pause time period, which serve as the second pause parameter.

The time dimension refers to that adjusting distribution of the pause time period of the operation unit while the operation unit remains unchanged. The spatial dimension refers to dividing the operation unit into multiple operation subunits and adjusting the pause time period of the operation subunit. Please refer to the foregoing embodiment for details, which are not described herein.

In some optional embodiments, for multiple operation units, the first activation operation time period and the first pause time period of the target operation unit that can be adjusted among the multiple operation units may be adjusted according to at least one of the time dimension and the spatial dimension, to obtain the adjusted second activation operation time period and second pause time period of the target operation unit, which serve as the second pause parameter of the target operation unit. There may be one or more target operation units. For an operation unit that does not need to be adjusted among the multiple operation units, the first activation operation time period and the first pause time period may be maintained, or the first activation operation time period and the first pause time period of the operation unit may be used as the second activation operation time period and the second pause time period of the operation unit.

In the embodiments, the first activation operation time period and the first pause time period are adjusted according to at least one of the time dimension and the spatial dimension, so that the adjusted second activation operation time period and second pause time period can be evenly distributed in a pause time period in at least one of the time dimension and the spatial dimension, which helps to improve the balance in the overall power consumption distribution of the operation unit, thereby alleviating the problems in power integrity.

In some optional embodiments, step 3032 of adjusting the first activation operation time period and the first pause time period according to at least one of the time dimension and the spatial dimension, to obtain the adjusted second activation operation time period and the second pause time period includes: adjusting the first activation operation time period and the first pause time period to at least two pause sub-time periods and at least one activation operation sub-time period that are arranged in a preset manner in the time dimension, wherein the arranged activation operation sub-time periods are respectively set as the second activation operation time period, respectively, and the arranged pause sub-time periods are respectively set as the second pause time period, respectively.

The preset manner may be any implementable manner. For example, the preset manner may be that at least two pause sub-time periods are not arranged consecutively, and at least one activation operation time period needs to be included between any two pause sub-time periods. For example, if two pause sub-time periods and two activation operation sub-time periods are arranged in the manner of pause sub-time period -> activation operation sub-time period → pause sub-time period → activation operation sub-time period, or in a manner of activation operation sub-time period → pause sub-time period → activation operation sub-time period → pause sub-time period, the adjusted second pause parameter includes two second activation operation sub-time periods and two second pause time periods that are arranged in the preset manner. When the second pause parameter is used to control the operation of the operation unit, the operation unit performs activation operations and pauses alternatively in the preset manner, thereby improving the balance in the power consumption distribution of the operation unit.

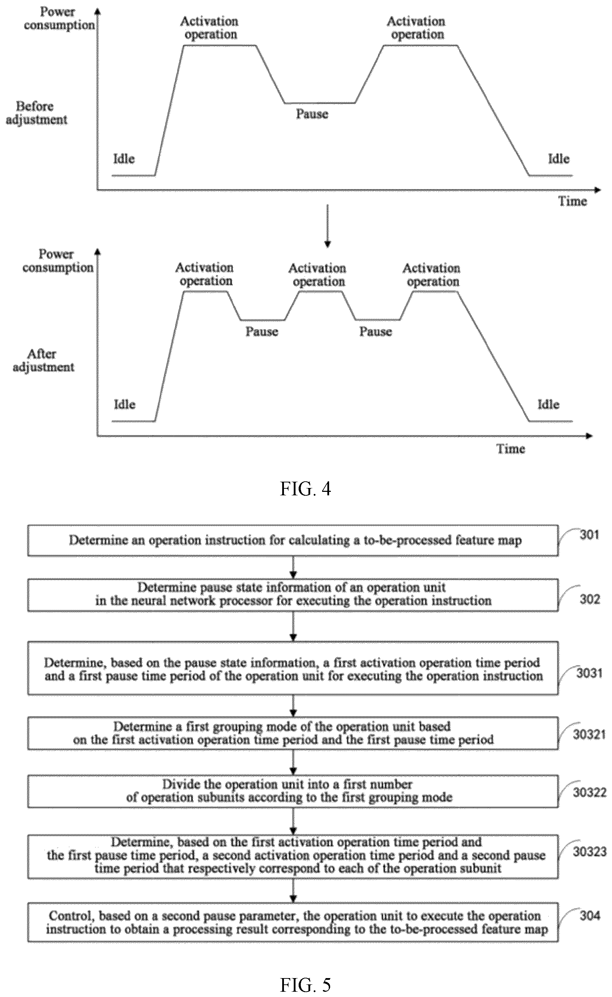

For example, FIG. 4 is a schematic diagram of power consumption distribution adjusted in a time dimension according to an exemplary embodiment of the present disclosure. As shown in FIG. 4, before the adjustment, pause time periods of the operation unit are relatively concentrated with large power consumption amplitude and long duration. After the adjustment is performed in the time dimension, the pause time periods of the operation unit are dispersed, and are evenly distributed in the time dimension. In this case, without reducing overall performance of the operation unit, amplitude and duration of each change in power consumption are reduced, and the balance in the power consumption distribution is effectively improved, thereby helping to alleviate the problems in power integrity.

In this embodiment, the adjusted second pause parameter of the operation unit is obtained by adjusting the first activation operation time period and the first pause time period to at least two pause sub-time periods and at least one activation operation sub-time period that are arranged in the preset manner in the time dimension. Thus, balanced distribution of pause time of the operation unit in the time dimension is achieved, which helps to improve the balance in the overall power consumption distribution of the operation unit.

FIG. 5 is a schematic flowchart of a method for processing a neural network feature map using a neural network processor according to still another exemplary embodiment of the present disclosure.

In some optional embodiments, as shown in FIG. 5, step 3032 of adjusting the first activation operation time period and the first pause time period according to at least one of the time dimension and the spatial dimension, to obtain the adjusted second activation operation time period and the second pause time period includes the following steps.

Step 30321. Determine a first grouping mode of the operation unit based on the first activation operation time period and the first pause time period.

The first grouping mode may include a number of groups of the operation unit and a mode of obtaining the operation subunits through division. The number of groups of the operation unit is a first number. Different grouping modes may correspond to different first numbers. Specifically, the first grouping mode of the operation unit may be determined based on a duration relationship between the first activation operation time period and the first pause time period; or the first grouping mode of the operation unit may be determined based on a duration ratio of the first activation operation time period to the first pause time period of the operation unit to be adjusted.

In some optional embodiments, the specific determining mode of determining the first grouping mode of the operation unit based on the first activation operation time period and the first pause time period may be any implementable mode. For example, the total duration of the first activation operation time period and the first pause time period may be divided into at least two time periods, so that in each time period, some of the first number of operation subunits are in the activation operation state, and the other operation subunits are in the pause state. In this case, the second activation operation time period and the second pause time period respectively corresponding to each operation subunit are obtained, so as to achieve balanced power consumption distribution in the spatial dimension while operation requirements are satisfied.

In some optional embodiments, for multiple operation units, the target operation unit to be adjusted may be determined from the multiple operation units based on the first activation operation time period and the first pause time period, and a first grouping mode of the target operation unit may be determined. Other operation units except the target operation unit in the multiple operation units are not grouped.

Step 30322. Divide the operation unit into a first number of operation subunits according to the first grouping mode.

The first grouping mode includes the number of groups of the operation unit and the mode of obtaining the operation subunits through division. Therefore, the first number may be determined based on the number of groups, and the operation unit may be divided into the first number of operation subunits according to the mode of obtaining the operation subunits through division. The mode of obtaining the operation subunits through division may include a number of calculation arrays respectively included in the operation subunits. For example, the operation unit includes 10 multiply-accumulate arrays, which are divided into two operation subunits, wherein each operation subunit includes 5 multiply-accumulate arrays, or one operation subunit includes fewer multiply-accumulate arrays (for example, including 4 multiply-accumulate arrays), and the other operation subunit includes more multiply-accumulate arrays (for example, including 6 multiply-accumulate arrays). The specific mode of obtaining the operation subunits through division may be determined according to actual requirements for operation performance and requirements for power consumption balance.

In some optional embodiments, according to the first grouping mode of the target operation unit to be adjusted, the target operation unit is divided into the first number of operation subunits. Other operation units may not be grouped.

Step 30323. Determine, based on the first activation operation time period and the first pause time period, a second activation operation time period and a second pause time period that respectively correspond to each of the operation subunits.

In some optional embodiments, the grouping mode of the operation units may be determined according to the duration relationship between the first activation operation time period and the first pause time period. For example, if the first activation operation time period and the first pause time period are same in duration, the first number may be any integer greater than 1, and the determined second activation operation time period and second pause time period that respectively correspond to each of the operation subunits may be parameters for operation subunits to be paused alternately, or parameters for operation subunits to be paused alternately in groups. For example, if the first number is 2, two operation subunits are alternately paused. In other words, in the first activation operation time period, one of the two operation subunits (which is, for example, referred to as a first operation subunit) performs an activation operation while the other operation subunit (which is, for example, referred to as a second operation subunit) is paused; and in the first pause time period, the first operation subunit is paused while the second operation subunit performs an activation operation. For the first operation subunit, a second pause parameter thereof includes the second activation operation time period and the second pause time period that are arranged in sequence. For the second operation subunit, a second pause parameter thereof includes the second pause time period and the second activation time period that are arranged in sequence. For another example, if the first number is 3, the operation unit is divided into a first operation subunit, a second operation subunit, and a third operation subunit, wherein the three operation subunits may be alternately paused. That is, the total duration of the first activation operation time period and the first pause time period may be divided into three time periods, such as a time period 1, a time period 2, and a time period 3. The three operation subunits are paused in the three time periods, respectively. In other words, there is one operation subunit paused in each time period. For example, in the time period 1, the first operation subunit is paused, while the second operation subunit and the third operation subunit perform activation operations; in time period 2, the second operation subunit is paused, while the first operation subunit and the third operation subunit perform activation operations; and in time period 3, the third operation subunit is paused, while the first operation subunit and the second operation subunit perform activation operations. A specific alternation order of the operation subunits is not limited. For another example, if the first number is 5, the total duration of the first activation operation time period and the first pause time period may be divided into at least two time periods, and five operation subunits are alternately paused in groups. For example, in the first time period, three operation subunits perform activation operations, while the remaining two operation subunits are paused; and in the second time period, the remaining two operation subunits perform activation operations, while the three operation subunits are paused. If duration of the first activation operation time period is longer than that of the first pause time period, the total duration of the first activation operation time period and the first pause time period may be divided into at least two time periods, so that in each time period, more operation subunits in the operation unit are in the activation operation state, and fewer operation subunits are in the pause state. If the duration of the first activation operation time period is shorter than that of the first pause time period, the total duration of the first activation operation time period and the first pause time period may be divided into at least two time periods, so that in each time period, fewer operation subunits in the operation unit are in the activation operation state, and more operation subunits are in the pause state. The specific manners for determining the first number and the second pause parameter of the operation subunit are not limited to the foregoing manners, and may also be any other feasible manners, as long as it can be ensured that the operation unit completes the operation within the total duration of the first activation operation time period and the first pause time period.

For example, the first grouping mode of the operation units may be determined based on the duration ratio of the first activation operation time period to the first pause time period of the operation unit to be adjusted, so that the operation units can evenly distribute pause time while meeting the operation requirements. For example, the operation unit A is the operation unit to be adjusted, duration of the first activation operation time period of the operation unit A is 60 operation cycles, and duration of the first pause time period is 40 operation cycles. An objective of the pause is to synchronize the operation unit A with the operation unit B. If duration of the first activation operation time period of the operation unit B is 100 operation cycles, the operation unit A needs to complete the operation within the 100 operation cycles. If the duration ratio of the first activation operation time period to the first pause time period is 3:2, the operation unit A may be divided into 5 operation subunits (or the operation unit A may be divided into two uneven operation subunits). The total duration of the first activation operation time period and the first pause time period is divided into at least two time periods, taking two time periods as an example. Alternatively, the first activation operation time period and the first pause time period are respectively taken as two time periods, and in each time period, at least 3 operation subunits perform activation operations, while the remaining operation subunits are paused.

In the embodiments, the operation unit is grouped into the first number of operation subunits, and the second activation operation time period and the second pause time period that respectively correspond to each operation subunit are determined based on the first activation operation time period and the first pause time period, so that in each calculation cycle, some of the operation subunits are in the activation operation state, while the other operation subunits are in the pause state. Thus, balanced power consumption distribution in the spatial dimension is achieve, which helps to improve the balance in the overall power consumption distribution of the operation unit.

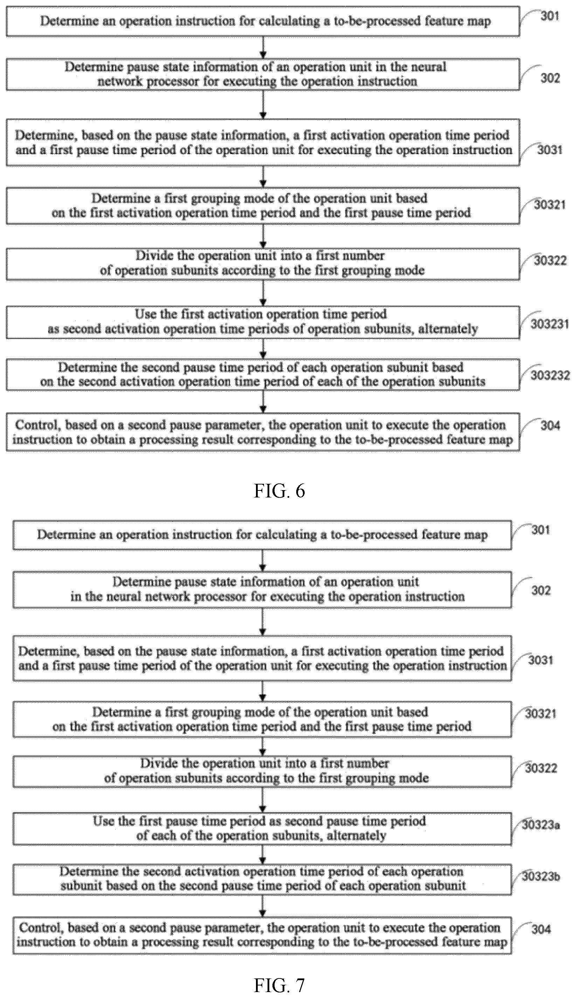

FIG. 6 is a schematic flowchart of a method for processing a neural network feature map using a neural network processor according to yet another exemplary embodiment of the present disclosure.

In some optional embodiments, as shown in FIG. 6, step 30323 of determining, based on the first activation operation time period and the first pause time period, the second activation operation time period and the second pause time period that respectively correspond to each operation subunit includes the following steps.

Step 303231. Use the first activation operation time period as second activation operation time periods of operation subunits, alternately.

In some optional embodiments, if operation requirements can be satisfied, the first activation operation time period may be used as the second activation operation time periods of operation subunits, alternately. For example, the first activation operation time period includes 20 operation cycles, the first pause time period includes 40 operation cycles, and there are 3 operation subunits. The first activation operation time period is alternately used as the second activation operation time periods of operation subunits, that is, the duration of the first activation operation time period for the operation subunits to perform the activation operations alternately. In other words, the total duration of the first activation operation time period and the first pause time period is divided into 3 time periods. In a first time period, an operation subunit 1 performs an activation operation, while an operation subunit 2 and an operation subunit 3 are paused; in a second time period, the operation subunit 2 performs an activation operation, while the operation subunit 1 and the operation subunit 3 are paused; and in a third time period, the operation subunit 3 performs an activation operation, while the operation subunit 1 and the operation subunit 2 are paused. In this way, the operation subunits perform the activation operations alternately.

In some optional embodiments, the first number may be determined according to a ratio of the duration of the first activation operation time period to the duration of the first pause time period, so as to ensure that the operation requirements can be satisfied when the first activation operation time period is alternately used as the second activation operation time periods of the operation subunits. Thus, duration required for the operation unit to complete the operation would not exceed the total duration of the first activation operation time period and the first pause time period. For example, the ratio of the duration of the first activation operation time period to the duration of the first pause time period is 1 : 2, and the first number may be set to 3, so that the total duration of the first activation operation time period and the first pause time period includes 3 first activation operation time periods, so as to use the first activation operation time period as the second activation operation time periods of the operation subunits, alternately.

In some optional embodiments, the second activation operation time period in which the operation subunits perform the activation operations alternately may also be determined again based on the total duration of the first activation operation time period and the first pause time period, so as to better adapt to the first number, thereby improving distribution balance in pause time while ensuring the operation performance.

Step 303232. Determine the second pause time period of each operation subunit based on the second activation operation time period of each operation subunit.

For any operation subunit, after the second activation operation time period of that operation subunit is determined, a time period except the second activation operation time period in the total duration is the second pause time period. For example, the total time 0-t is divided into 3 time periods, that is, 0-t1, t1-t2, and t2 -t3. If tl-t2 is the second activation operation time period of the operation subunit, the operation subunit is paused in the time periods of 0-t1 and t1-t2. In other words, the time periods of 0-t1 and t1-t2 are second pause time periods of the operation subunit.

In the embodiments, the first activation operation time period is alternately used as the second activation operation time periods of the operation subunits, so that the operation subunits perform activation operations alternately. Thus, pause time distribution of the operation subunits is more balanced, which helps to improve the balance in the overall power consumption distribution of the operation unit.

FIG. 7 is a schematic flowchart of a method for processing a neural network feature map using a neural network processor according to still yet another exemplary embodiment of the present disclosure.

In some optional embodiments, as shown in FIG. 7, step 30323 of determining, based on the first activation operation time period and the first pause time period, the second activation operation time period and the second pause time period that respectively correspond to each operation subunit includes the following steps.

Step 30323a. Use the first pause time period as second pause time periods of operation subunits, alternately.

In some optional embodiments, when the operation requirements can be satisfied, the first pause time period may be alternately used as the second pause time periods of operation subunits, so that the operation subunits can be alternately paused. For example, the first activation operation time period includes 40 operation cycles, the first pause time period includes 20 operation cycles, and there are 3 operation subunits. The first pause time period is alternately used as the second activation operation time periods of the operation subunits, so that the operation subunits are alternately paused in the 20 operation cycles, thereby achieving balanced pause time distribution.

In some optional embodiments, the second pause time period in which the operation subunits are alternately paused may be determined again based on the total duration of the first activation operation time period and the first pause time period, so as to better adapt to the first number, thereby improving the distribution balance in the pause time while ensuring the operation performance.

Step 30323b. Determine the second activation operation time period of each operation subunit based on the second pause time period of each operation subunit.

For any operation subunit, after the second pause time period of this operation subunit is determined, a time period except the second pause time period in the total duration is the second activation operation time period.

In the embodiments, the first pause time period is alternately used as the second pause time periods of the operation subunits, so that the operation subunits are alternately paused. Thus, the pause time distribution of the operation subunits is more balanced, which helps to improve the balance in the overall power consumption distribution of the operation unit.

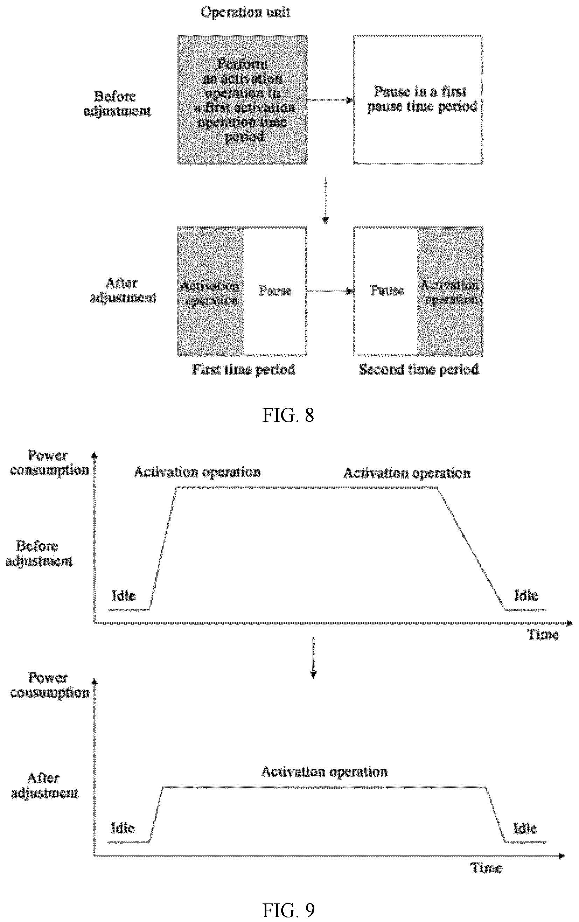

In some optional embodiments, FIG. 8 is a schematic diagram of a spatial dimension adjustment principle according to an exemplary embodiment of the present disclosure. As shown in FIG. 8, before the adjustment, all the operation units perform activation operations in the first activation operation time period, and all are paused in the first pause time period. Spatial utilization distribution of the operation units is relatively concentrated, and the overall balance in the power consumption distribution is relatively poor. After the adjustment, in the first time period, some operation subunits of the operation unit perform activation operations, and the other operation subunits are paused. In the second time period, some operation subunits change from the activation operation state to the pause state, and the other operation subunits change from the pause state to the activation operation state, which reduces the spatial utilization of the operation units in a same time period and helps to improve the balance in the overall power consumption distribution of the operation unit. FIG. 9 is a schematic diagram of power consumption distribution adjusted on a spatial dimension according to an exemplary embodiment of the present disclosure. As shown in FIG. 9, FIG. 9 is a schematic diagram of power consumption distribution corresponding to FIG. 8. It may be learned that through adjustment in the spatial dimension, some operation resources are paused in a same time period, which reduces average power consumption for the operation unit to perform operations, and helps to improve the balance in the power consumption distribution.

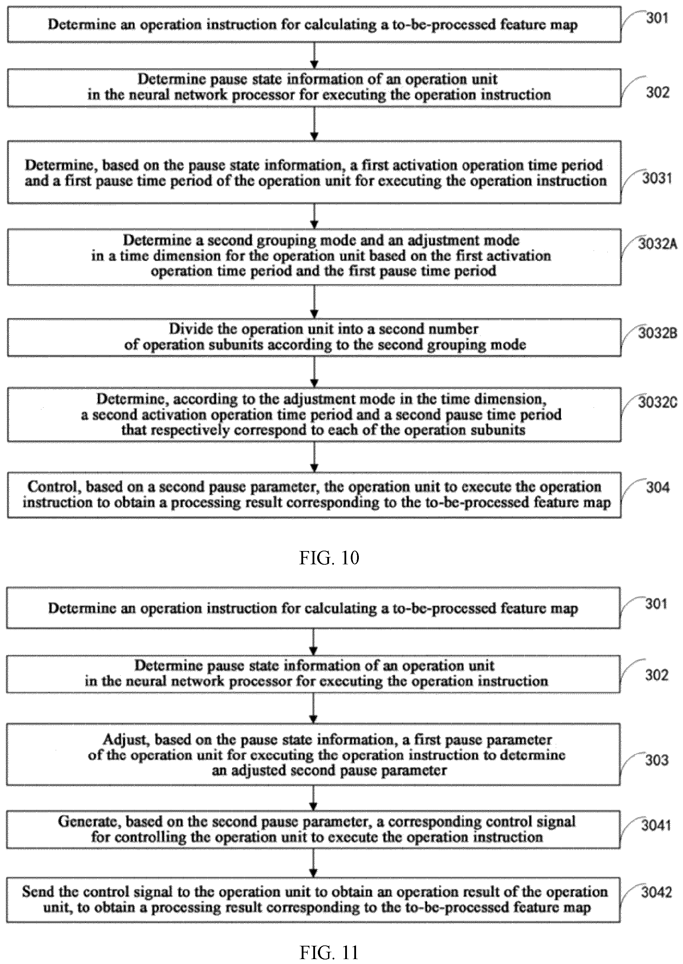

FIG. 10 is a schematic flowchart of a method for processing a neural network feature map using a neural network processor according to a further exemplary embodiment of the present disclosure.

In some optional embodiments, as shown in FIG. 10, step 3032 of adjusting the first activation operation time period and the first pause time period according to at least one of the time dimension and the spatial dimension, to obtain the adjusted second activation operation time period and the second pause time period includes the following steps.

Step 3032A. Determine a second grouping mode and an adjustment mode in the time dimension for the operation unit based on the first activation operation time period and the first pause time period.

The first activation operation time period and the first pause time period of the operation unit to be adjusted may be adjusted in both the time dimension and the spatial dimension, so as to more effectively improve the balance in the power consumption distribution of the operation unit. The second grouping mode corresponds to the spatial dimension, and the adjustment mode in the time dimension corresponds to the time dimension.

In some optional embodiments, the second grouping mode may include a number of groups of the operation unit and a mode of obtaining the operation subunits through division. The number of groups of the operation unit may be referred to as a second number. The second grouping mode may include two grouping modes: uniform grouping and non-uniform grouping. The uniform grouping refers to evenly classifying the calculation arrays in the operation unit into the second number of groups, to obtain the second number of operation subunits with same computing power. The non-uniform grouping refers to that numbers of calculation arrays included in the operation subunits obtained through division may be inconsistent, and the second number of operation subunits with possibly different computing power are obtained. For example, the operation unit includes 10 multiply-accumulate arrays, and the operation unit is evenly divided into two operation subunits, each of which includes 5 multiply-accumulate arrays. Alternatively, the operation unit is non-evenly divided into two operation subunits, one of which includes 6 multiply-accumulate arrays, and the other one includes 4 multiply-accumulate arrays.

A principle of determining the second grouping mode and the adjustment mode in the time dimension is to make the pause time of the operation unit more balanced in the time dimension and the spatial dimension while ensuring the operation performance of the operation unit. For example, the adjustment mode in the time dimension may include dividing the pause time of each operation subunit into at least two pause sub-time periods. The at least two pause sub-time periods of each operation subunit are non-consecutively distributed in the total duration of the first activation operation time period and the first pause time period. The pause sub-time periods of different operation subunits are different time periods in the total duration, thereby achieving balance in both the time dimension and the spatial dimension.

Step 3032B. Divide the operation unit into a second number of operation subunits based on the second grouping mode.

After the second grouping mode is determined, the operation unit may be divided into the second number of operation subunits according to the second grouping mode. Different second grouping modes may correspond to different second numbers.

Step 3032C. Determine, according to the adjustment mode in the time dimension, a second activation operation time period and a second pause time period that respectively correspond to each operation subunit.

In some optional embodiments, after the adjustment mode in the time dimension is determined, the activation operation time period and the pause time period of each operation subunit may be adjusted according to the adjustment mode in the time dimension. An original pause parameter of each operation subunit is consistent with that of the operation unit to which the operation subunit belongs. To be specific, the first pause parameter of each operation subunit before adjustment is the first activation operation time period and the first pause time period.

In some optional examples, the first activation operation time period includes 20 operation cycles, and the first pause time period includes 40 operation cycles. The operation unit may be divided into at least two operation subunits. The second activation operation time period for the operation subunits to be evenly distributed in the 60 operation cycles is determined according to the operation requirements, and then, the second pause time period of each operation subunit in the 60 operation cycles is determined based on the second activation operation time period of each operation subunit. For example, the operation unit is divided into 2 operation subunits, each of which needs to perform activation operations for 20 operation cycles and needs to be paused for 40 operation cycles. The operation cycles in which the two operation subunits need to perform activation operations are evenly distributed in the 60 operation cycles, so that the second activation operation time period corresponding to each operation subunit may be obtained. Alternatively, the operation cycles in which the two operation subunits are paused are evenly distributed in the 60 operation cycles to obtain the second pause time period corresponding to each operation subunit. For example, the operation subunit 1 performs activation operations in calculation cycles 1-5, 16-20, 31-35, and 46-50, and is paused in other time periods; and the operation subunit 2 performs activation operations in calculation cycles 6-10, 21-25, 36-40, and 51-55, and is paused in other time periods. Only an exemplary distribution mode is described herein, and a specific distribution mode is not limited to the foregoing mode.

In the embodiments, the second grouping mode and the adjustment mode in the time dimension of the operation unit are determined, so that the first activation operation time period and the first pause time period of the operation unit are comprehensively adjusted in the time dimension and the spatial dimension, so as to obtain the balanced second activation operation time period and second pause time period, which helps to further improve the balance in the overall power consumption distribution of the operation unit.

FIG. 11 is a schematic flowchart of a method for processing a neural network feature map using a neural network processor according to a still further exemplary embodiment of the present disclosure.

In some optional embodiments, as shown in FIG. 11, step 304 of controlling, based on the second pause parameter, the operation unit to execute the operation instruction to obtain a processing result corresponding to the to-be-processed feature map includes the following steps:

Step 3041. Generate, based on the second pause parameter, a corresponding control signal for controlling the operation unit to execute the operation instruction.

The control signal is a signal for controlling the operation unit to enter the working state to perform the activation operation or to pause. For example, the control signal may include an enable signal. The enable signal may include two states, one of which is an enable signal (such as a high-level signal or 1) indicating that the operation unit enters the working state to perform the activation operation, and the other is an enable signal (such as a low-level signal or 0) indicating that the operation unit does not enter the working state. Alternatively, the control signal may include an enable signal and a pause signal. In this case, the enable signal is used to control the operation unit to enter the working state or not, and the pause signal is used to control the operation unit to perform the activation operation (for example, the pause signal is 0 or is at a low level) or to pause (for example, the pause signal is 1 or is at a high level). A specific implementation manner of the control signal is not limited.

In some optional embodiments, the specific working state of the operation unit at a current moment (or in a current calculation cycle), for example, performing an activation operation or pausing, may be determined based on the second activation operation time period and the second pause time period of the operation unit that are included in the second pause parameter, and the control signal corresponding to the operation unit is generated based on the specific working state of the operation unit. For example, if the operation unit is in the activation operation state in the current calculation cycle, the generated control signal is a signal that enables the operation unit to enter the activation operation state. For example, the enable signal is 1 or 1, and the pause signal is 0.

Step 3042. Send the control signal to the operation unit to obtain an operation result of the operation unit, to obtain a processing result corresponding to the to-be-processed feature map.

The operation unit performs the activation operation or pauses under the action of the control signal. For example, when the operation unit performs the activation operation, the calculation array in the operation unit calculates the input feature value based on the operation instruction. For example, the multiply-accumulate array performs multiplication calculation on the input feature value and the weight, and calculation results of the calculation arrays constitute the operation result of the operation unit. The controller may obtain the operation result of each operation unit, and obtain the processing result corresponding to the to-be-processed feature map based on the operation result of each operation unit. For example, the processing result of the convolution operation on the to-be-processed feature map is obtained.

In some optional embodiments, after executing the operation instruction and obtaining the operation result, the operation unit may return the operation result to the controller, or may store the operation result, for example, in a register or in a designated storage space of the memory. The controller may obtain the operation result of each operation unit from the register or the designated storage space.

In the embodiments, the control signal for the operation unit is generated based on the adjusted second pause parameter, and the operation unit is controlled to be activated and paused based on the adjusted second pause parameter, thereby achieving balanced distribution of pause time, and improving the balance in the power consumption distribution during the operation process, which helps to alleviate the problems in power integrity.

In some optional embodiments, step 3041 of generating, based on the second pause parameter, the control signal for controlling the operation unit to execute the operation instruction includes: for any operation cycle of the operation instruction, determining a working state of the operation unit in the operation cycle based on the second pause parameter; and generating a control signal corresponding to the operation unit based on the working state of the operation unit in the operation cycle.

The operation cycle is the calculation cycle described above, and the second pause parameter includes the second activation time period and the second pause time period of the operation unit. Each second activation time period may include one or more operation cycles, and each second pause time period may include one or more operation cycles. For any operation cycle, it may be determined whether the operation cycle belongs to the second activation operation time period or the second pause time period, so as to determine the working state of the operation unit in this operation cycle. Each operation unit performs calculations according to the calculation cycle, and specific types of the calculations performed by the operation unit in different cycles are the same, for example, are multiplication, addition, and the like. However, the input feature data may be different. For example, the operation unit needs to complete 10 multiplication operations, and a multiplier and a multiplicand of each multiplication operation may be different. The second pause parameter of the operation unit includes the second activation operation time period and the second pause time period of the operation unit. The specific working state of the operation unit in any operation cycle (which may be referred to as the current operation cycle) may be determined based on the second activation operation time period and the second pause time period. For example, if the current operation cycle is in a certain second activation operation time period of the operation unit, it is determined that the working state of the operation unit in this operation cycle is the activation operation state. The generated control signal of the operation unit is a control signal that enables the operation unit to perform the activation operation.

In the embodiments, the working state of the operation unit in each operation cycle is determined based on the second pause parameter, so as to accurately generate the control signal of the operation unit. This helps to achieve accurate and effective control for the operation unit, thereby achieve the balanced power consumption distribution.

In some optional embodiments, generating the control signal corresponding to the operation unit based on the working state of the operation unit in the operation cycle includes:
determining an enable state and a pause state of the operation unit based on the working state of the operation unit in the operation cycle; in response to that the enable state of the operation unit is enabled, generating an enable signal indicating enablement, wherein the enable signal indicating enablement is used to enable the operation unit to perform operations in the case that the pause state is non-paused; in response to that the enable state of the operation unit is disabled, generating an enable signal indicating non-enablement; in response to that the pause state of the operation unit in the operation cycle is paused, generating a pause signal indicating pause, wherein the pause signal is used to enable the operation unit to pause operations; and in response to that the pause state of the operation unit in the operation cycle is non-paused, generating a pause signal indicating non-pause.

The enable state indicates whether the operation unit enters the working state, and the enable state may include two states: enabled and non-enabled. The pause state indicates whether the operation unit pauses the operation. The pause state may include two states: paused and non-paused. If the enable state of the operation unit is enabled, it indicates that the operation unit is in the working state and may perform the activation operation. If the enable state of the operation unit is non-enabled, it indicates that the operation unit is in the idle state and cannot perform the activation operation. If the pause state of the operation unit is paused, it indicates that the state of the operation unit is an operation paused state. If the pause state of the operation unit is non-paused, it indicates that the state of the operation unit may be the activation operation state. However, it is required that the enable state of the operation unit is enabled and the pause state is non-paused, so that the operation unit can enter the activation operation state, which helps to achieve active pause of the operation unit through the pause state. The enable signal indicating enablement may be implemented in any way. For example, the enable signal indicating enablement may be a high-level signal or with a signal state of 1. On the contrary, the enable signal indicating non-enablement may be a low-level signal or with a signal state of 0. The pause signal indicating paused may be a high-level signal or with a signal state of 1. The pause signal indicating non-paused may be a low level signal or with a signal state of 0.

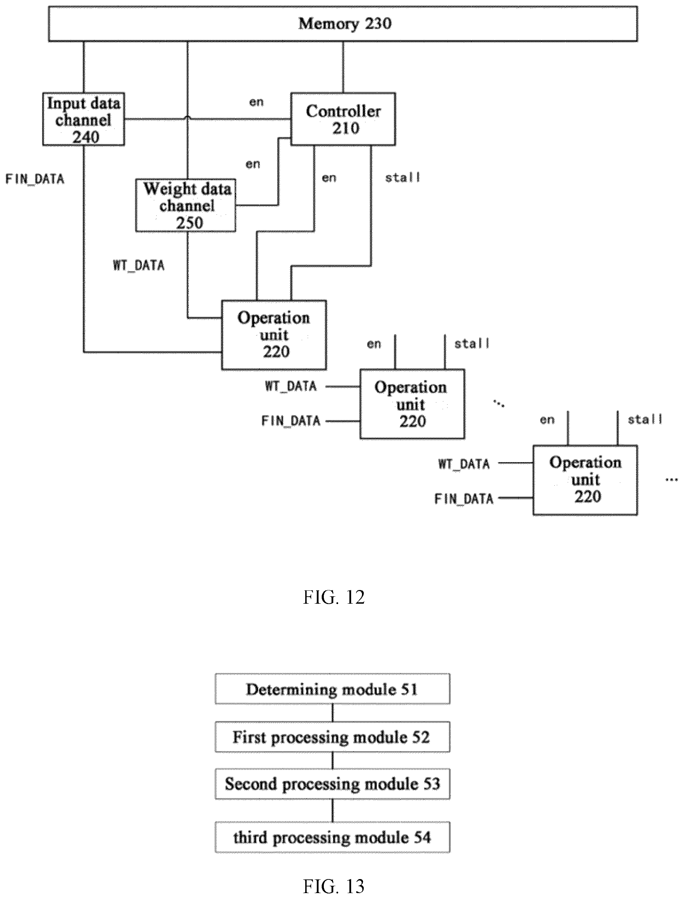

In some optional embodiments, FIG. 12 is a schematic diagram of a control principle of an operation unit according to an exemplary embodiment of the present disclosure. As shown in FIG. 12, the neural network processor may also include a memory 230, an input data channel 240, and a weight data channel 250. en represents the enable signal, and stall represents the pause signal. This figure only shows a schematic diagram of a connection relationship of one operation unit 220, and connection relationships of other operation units 220 is consistent with that of the operation unit 220 shown. To be specific, the controller 210 may generate an enable signal and a pause signal for each operation unit 220 to control the operation unit to enter the working state, perform an activation operation, pause, exit the working state, or the like. The input data channel 240 is used to read input feature data (FIN_DATA, such as the to-be-processed feature map) from the memory 230 under the action of the enable signal of the controller 210, and provide the input feature data to the operation unit 220. Under the action of the enable signal of the controller 210, the weight data channel 250 reads weight data (WT_DATA) from the memory 230, and provides the weight data to the operation unit 220, so that the operation unit 220 can perform an operation on the input feature data and the weight data under the action of the enable signal and the pause signal of the controller 210, so as to obtain an operation result. The operation unit 220 enters the activation operation state in the case that en is valid (being 1 or at a high level) and stall is invalid (stall is 0 or is at a low level). The operation unit 220 enters the pause state in the case that en and stall are valid.

In the embodiments, the state of the operation unit is controlled through the enable signal and the pause signal, which helps to achieve active pause of the operation unit through the pause signal on the basis of a passive pause in related technologies, thereby supporting adjustment of the first pause parameter of the passive pause, and actively controlling the pause of the operation unit through the pause signal based on the adjusted second pause parameter. In this way, the balance in the power consumption distribution is improved.

In some optional embodiments, step 3041 of generating, based on the second pause parameter, the corresponding control signal for controlling the operation unit to execute the operation instruction includes: for any operation cycle of the operation instruction, determining respective working states of operation subunits in the operation unit in the operation cycle based on the second pause parameter; and generating control signals respectively corresponding to the operation subunits according to the working states of the operation subunits.

Step 3042 of sending the control signal to the operation unit to obtain the operation result of the operation unit includes: sending the control signals respectively corresponding to the operation subunits to the operation subunits to obtain operation results respectively corresponding to the operation subunits.

For the adjustment mode involving spatial dimension adjustment, for the operation unit divided into operation subunits, the control signal corresponding to each operation subunit may be generated in each operation cycle to control each operation subunit to perform the activation operation and pause based on the adjusted second pause parameter. The specific control principle is similar to the foregoing control for the operation unit, and details are not described herein.

In the embodiments, for the operation unit that performs adjustment in the spatial dimension, the working state of each operation subunit in each operation cycle is determined based on the second pause parameter of each operation subunit, and the control signal corresponding to each operation subunit is generated based on the working state, so that separate control of each operation subunit is achieved. Thus, the pause time of each operation subunit can be more evenly distributed, thereby improving the balance in the power consumption distribution of the operation unit.

According to the method for processing a neural network feature map using a neural network processor provided in the embodiments of the present disclosure, the balance in the power consumption distribution of the operation unit is controlled by dynamically adjusting time utilization and space utilization of the operation unit, thereby alleviating the problems in power integrity.

The foregoing embodiments of the present disclosure may be implemented separately or in any combination without conflict. This may be specifically set according to actual requirements, and is not limited in the present disclosure.

Any method for processing a neural network feature map using a neural network processor provided in the embodiments of the present disclosure may be implemented by any appropriate device with data processing capabilities, including but not limited to a terminal device and a server. Alternatively, any method for processing a neural network feature map using a neural network processor provided in the embodiments of the present disclosure may be implemented by a processor. For example, the processor implements any method for processing a neural network feature map using a neural network processor described in the embodiments of the present disclosure by calling corresponding instructions stored in a memory. Details are not described below.

### Exemplary Apparatus

FIG. 13 is a schematic diagram of a structure of an apparatus for processing a neural network feature map by a neural network processor according to an exemplary embodiment of the present disclosure. The apparatus for processing a neural network feature map by a neural network processor in this embodiment may be configured to implement the corresponding method embodiments of the method for processing a neural network feature map by a neural network processor in the present disclosure. The apparatus shown in FIG. 13 includes a determining module 51, a first processing module 52, a second processing module 53, and a third processing module 54.

The determining module 51 is configured to determine an operation instruction for calculating a to-be-processed feature map.

The first processing module 52 is configured to determine pause state information of an operation unit in the neural network processor for executing the operation instruction.

The second processing module 53 is configured to adjust, based on the pause state information, a first pause parameter of the operation unit for executing the operation instruction to determine an adjusted second pause parameter.

The third processing module 54 is configured to control, based on the second pause parameter, the operation unit to execute the operation instruction to obtain a processing result corresponding to the to-be-processed feature map.

Each module of the apparatus in this embodiment of the present disclosure may be implemented by software, hardware, or a combination of software and hardware.

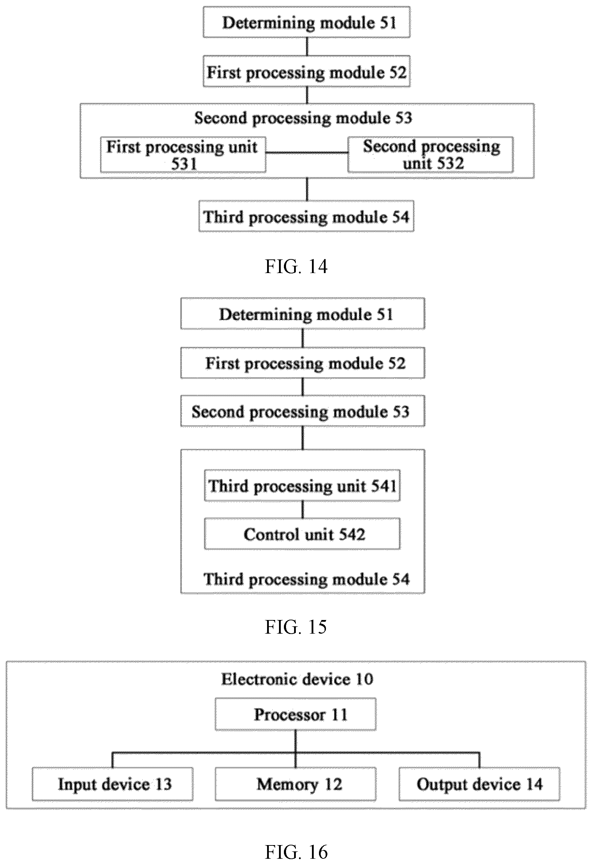

FIG. 14 is a schematic diagram of a structure of an apparatus for processing a neural network feature map using a neural network processor according to another exemplary embodiment of the present disclosure.

In some optional embodiments, as shown in FIG. 14, the second processing module 53 includes a first processing unit 531 and a second processing unit 532.

The first processing unit 531 is configured to determine, based on the pause state information, a first activation operation time period and a first pause time period of the operation unit for executing the operation instruction.

The second processing unit 532 is configured to adjust the first activation operation time period and the first pause time period according to at least one of a time dimension and a spatial dimension, to obtain an adjusted second activation operation time period and a second pause time period, which serve as the second pause parameter.

In some optional embodiments, the second processing unit 532 is specifically configured to: adjust the first activation operation time period and the first pause time period to at least two pause sub-time periods and at least one activation operation sub-time period that are arranged in a preset manner in the time dimension, wherein the arranged activation operation sub-time periods are respectively set as the second activation operation time period, and the arranged pause sub-time periods are respectively set as the second pause time period.

In some optional embodiments, the second processing unit 532 is specifically configured to: determine a first grouping mode of the operation unit based on the first activation operation time period and the first pause time period; divide the operation unit into a first number of operation subunits according to the first grouping mode; and determine, based on the first activation operation time period and the first pause time period, a second activation operation time period and a second pause time period that respectively correspond to each operation subunit.

In some optional embodiments, the second processing unit 532 is specifically configured to: using the first active operation time period as second active operation time periods of various operation subunit, alternately; and determine the second pause time period of each operation subunit based on the second active operation time period of each operation subunit.

In some optional embodiments, the second processing unit 532 is specifically configured to: use the first pause time period as second pause time periods of operation subunits, alternately; and determine the second activation operation time period of each operation subunit based on the second pause time period of each operation subunit.

In some optional embodiments, the second processing unit 532 is specifically configured to: determine a second grouping mode and an adjustment mode in the time dimension for the operation unit based on the first activation operation time period and the first pause time period; divide the operation unit into a second number of operation subunits according to the second grouping mode; and determine, according to the adjustment mode in the time dimension, a second activation operation time period and a second pause time period that respectively correspond to each operation subunit.

FIG. 15 is a schematic diagram of a structure of an apparatus for processing a neural network feature map using a neural network processor according to still another exemplary embodiment of the present disclosure.

In some optional embodiments, as shown in FIG. 15, the third processing module 54 includes a third processing unit 541 and a control unit 542.

The third processing unit 541 is configured to generate, based on the second pause parameter, a corresponding control signal for controlling the operation unit to execute the operation instruction.

The control unit 542 is configured to send the control signal to the operation unit to obtain an operation result of the operation unit, to obtain a processing result corresponding to the to-be-processed feature map.

In some optional embodiments, the third processing unit 541 is specifically configured to: for any operation cycle of the operation instruction, determine a working state of the operation unit in the operation cycle based on the second pause parameter; and generate a control signal corresponding to the operation unit based on the working state of the operation unit in the operation cycle.

In some optional embodiments, the third processing unit 541 is specifically configured to : determine an enable state and a pause state of the operation unit based on the working state of the operation unit in the operation cycle; in response to that the enable state of the operation unit is enabled, generate an enable signal indicating enablement, wherein the enable signal indicating enablement is used to enable the operation unit to perform operations in the case that the pause state is non-paused; in response to that the enable state of the operation unit is disabled, generate an enable signal indicating non-enablement; in response to that the pause state of the operation unit in the operation cycle is paused, generate a pause signal indicating pause, wherein the pause signal is used to enable the operation unit to pause operations; and in response to that the pause state of the operation unit in the operation cycle is non-paused, generate a pause signal indicating non-pause.

In some optional embodiments, the third processing unit 541 is specifically configured to: for any operation cycle of the operation instruction, determine respective working states of operation subunits in the operation unit in the operation cycle based on the second pause parameter; and generate control signals respectively corresponding to the operation subunits based on the working states of the operation subunits.

The control unit 542 is specifically configured to: send the control signals respectively corresponding to the operation subunits to the operation subunits to obtain operation results respectively corresponding to the operation subunits, so as to obtain the processing result corresponding to the to-be-processed feature map.

For beneficial technical effects corresponding to the exemplary embodiment of the present device, reference may be made to the corresponding beneficial technical effects in the foregoing "Exemplary Method" section, and details are not described herein again.

### Exemplary Electronic Devices

FIG. 16 is a diagram of a structure of an electronic device according to an embodiment of the present disclosure. The electronic device includes at least one processor 11 and a memory 12.

The processor 11 may be a central processing unit (CPU) or another form of processing unit having a data processing capability and/or instructions execution capability, and may control other components in the electronic device 10 to implement desired functions.

The memory 12 may include one or more computer program products, which may include various forms of computer readable storage media, such as a volatile memory and/or a non-volatile memory. The volatile memory may include, for example, a random access memory (RAM) and/or a cache. The non-volatile memory may include, for example, a read-only memory (ROM), a hard disk, and a flash memory. One or more computer program instructions may be stored on the computer readable storage medium. The processor 11 may execute the one or more computer program instructions to implement the method according to the various embodiments of the present disclosure that are described above and/or other desired functions.

In an example, the electronic device 10 may further include an input device 13 and an output device 14. These components are connected to each other through a bus system and/or another form of connection mechanism (not shown).

The input device 13 may also include, for example, a keyboard and a mouse, ect.

The output device 14 may output various information to the outside, and may include, for example, a display, a speaker, a printer, a communication network, and a remote output device connected to the communication network, ect.

Certainly, for simplicity, FIG. 16 only shows some of the components in the electronic device 10 that are related to the present disclosure, and components such as a bus and an input/output interface are omitted. In addition, according to specific application situations, the electronic device 10 may further include any other appropriate components.

In addition, embodiments of the present disclosure also provides an electronic device, which includes the apparatus for processing a neural network feature map by a neural network processor according to any one of the foregoing embodiments, or includes the neural network processor according to any one of the foregoing embodiments.

### Exemplary computer program product and computer readable storage medium

In addition to the foregoing method and device, embodiments of the present disclosure may also provide a computer program product, including computer program instructions. When the computer program instructions are executed by a processor, the processor is enabled to perform the steps, of the method according to the embodiments of the present disclosure, that are described in the foregoing "Exemplary Method" section.

The computer program product may be program code, written with one or any combination of a plurality of programming languages to write program code, that is configured to perform the operations in the embodiments of the present disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or server.

In addition, the embodiments of the present disclosure may also relate toa computer readable storage medium having computer program instructions stored thereon. When the computer program instructions are executed by a processor, the processor is enabled to perform the steps, of the method of according to the embodiments of the present disclosure, that are described in the foregoing "Exemplary Method" section.

The computer readable storage medium may be one readable medium or any combination of a plurality of readable media. The readable medium can be a readable signal medium or a readable storage medium. The readable storage medium includes, for example but not limited to, a system, an apparatus, or a device of electricity, magnetism, light, electromagnetism, infrared ray, or a semiconductor, or any combination of the above. More specific examples (non-exhaustive list) of thee readable storage medium include: an electrical connection with one or more conducting wires, a portable disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above.

Basic principles of the present disclosure are described above in conjunction with specific embodiments. However, the advantages, superiorities, and effects mentioned in the present disclosure are only examples but are not for limitation, and it cannot be considered that these advantages, superiorities, and effects are necessary for each embodiment of the present disclosure. In addition, specific details described above are only for examples and for ease of understanding, rather than limitation. The details described above do not limit that the present disclosure must be implemented by using the foregoing specific details.

A person skilled in the art may make various modifications and variations to the present disclosure without departing from the spirit and the scope of the present application. Thus, if these modifications and variations of the present application fall within the scope of the claims and equivalent technologies of the present disclosure, the present disclosure also intends to include these modifications and variations.

## Claims

1. A method for processing a neural network feature map using a neural network processor, **characterized in that** the method comprises:
determining (301) an operation instruction for calculating a to-be-processed feature map;
determining (302) pause state information of an operation unit (220) in the neural network processor for executing the operation instruction;
adjusting (303), based on the pause state information, a first pause parameter of the operation unit (220) for executing the operation instruction to determine an adjusted second pause parameter; and
controlling (304), based on the second pause parameter, the operation unit (220) to execute the operation instruction to obtain a processing result corresponding to the to-be-processed feature map.

2. The method according to claim 1, wherein the adjusting (303), based on the pause state information, a first pause parameter of the operation unit (220) for executing the operation instruction, to determine an adjusted second pause parameter comprises:
determining (3031), based on the pause state information, a first activation operation time period and a first pause time period of the operation unit (220) for executing the operation instruction; and
adjusting (3032) the first activation operation time period and the first pause time period according to at least one of a time dimension and a spatial dimension, to obtain an adjusted second activation operation time period and a second pause time period, which serve as the second pause parameter.

3. The method according to claim 2, wherein the adjusting (3032) the first activation operation time period and the first pause time period according to at least one of a time dimension and a spatial dimension, to obtain an adjusted second activation operation time period and a second pause time period comprises:
adjusting the first activation operation time period and the first pause time period to at least two pause sub-time periods and at least one activation operation sub-time period that are arranged in a preset manner in the time dimension, wherein the arranged activation operation sub-time periods are respectively set as the second activation operation time period, and the arranged pause sub-time periods are respectively set as the second pause time period.

4. The method according to claim 2, wherein the adjusting the first activation operation time period and the first pause time period according to at least one of a time dimension and a spatial dimension, to obtain an adjusted second activation operation time period and a second pause time period comprises:
determining (30321) a first grouping mode of the operation unit (220) based on the first activation operation time period and the first pause time period;
dividing (30322) the operation unit (220) into a first number of operation subunits according to the first grouping mode; and
determining (30323), based on the first activation operation time period and the first pause time period, a second activation operation time period and a second pause time period that respectively correspond to each operation subunit.

5. The method according to claim 4, wherein the determining, based on the first activation operation time period and the first pause time period, a second activation operation time period and a second pause time period that respectively correspond to each operation subunit comprises:
using (303231) the first activation operation time period as second activation operation time periods of the operation subunits, alternately; and
determining (303232) the second pause time period of each operation subunit based on the second activation operation time period of each operation subunit.

6. The method according to claim 4, wherein the determining, based on the first activation operation time period and the first pause time period, a second activation operation time period and a second pause time period that respectively correspond to each operation subunit comprises:
using (30323a) the first pause time period as second pause time period of each operation subunit, alternately; and
determining (30323b) the second activation operation time period of each operation subunit based on the second pause time period of each operation subunit.

7. The method according to claim 2, wherein the adjusting the first activation operation time period and the first pause time period according to at least one of a time dimension and a spatial dimension, to obtain an adjusted second activation operation time period and a second pause time period comprises:
determining (3032A) a second grouping mode and an adjustment mode in the time dimension of the operation unit (220) based on the first activation operation time period and the first pause time period;
dividing (3032B) the operation unit (220) into a second number of operation subunits according to the second grouping mode; and
determining (3032C), according to the adjustment mode in the time dimension, a second activation operation time period and a second pause time period that respectively correspond to each operation subunit.

8. The method according to any one of claims 1 and 2, wherein the controlling, based on the second pause parameter, the operation unit (220) to execute the operation instruction to obtain a processing result corresponding to the to-be-processed feature map comprises:
generating (3041), based on the second pause parameter, a corresponding control signal for controlling the operation unit (220) to execute the operation instruction; and
sending (3042) the control signal to the operation unit (220) to obtain an operation result of the operation unit (220), to obtain a processing result corresponding to the to-be-processed feature map.

9. The method according to claim 8, wherein the generating, based on the second pause parameter, a corresponding control signal for controlling the operation unit (220) to execute the operation instruction comprises:
for any operation cycle of the operation instruction, determining a working state of the operation unit (220) in the operation cycle based on the second pause parameter; and
generating a control signal corresponding to the operation unit (220) based on the working state of the operation unit (220) in the operation cycle.

10. The method according to claim 9, wherein the generating a control signal corresponding to the operation unit (220) based on the working state of the operation unit (220) in the operation cycle comprises:
determining an enable state and a pause state of the operation unit (220) according to the working state of the operation unit (220) in the operation cycle;
in response to that the enable state of the operation unit (220) is enabled, generating an enable signal indicating enablement, wherein the enable signal indicating enablement is used to enable the operation unit (220) to perform operations in the case that the pause state is non-paused;
in response to that the enable state of the operation unit (220) is disabled, generating an enable signal indicating non-enablement;
in response to that the pause state of the operation unit (220) in the operation cycle is paused, generating a pause signal indicating pause, wherein the pause signal is used to enable the operation unit (220) to pause operations; and
in response to that the pause state of the operation unit (220) in the operation cycle is non-paused, generating a pause signal indicating non-pause.

11. The method according to claim 8, wherein the generating, based on the second pause parameter, a corresponding control signal for controlling the operation unit (220) to execute the operation instruction comprises:
for any operation cycle of the operation instruction, determining respective working states of operation subunits in the operation unit (220) in the operation cycle based on the second pause parameter; and
generating control signals respectively corresponding to the operation subunits based on the working states of the operation subunits; and
the sending the control signal to the operation unit (220) to obtain an operation result of the operation unit (220) comprises:
sending the control signals respectively corresponding to the operation subunits to the operation subunits to obtain operation results respectively corresponding to the operation subunits.

12. An apparatus for processing a neural network feature map by a neural network processor, comprising:
a determining module (51), configured to determine an operation instruction for calculating a to-be-processed feature map;
a first processing module (52), configured to determine pause state information of an operation unit (220) in the neural network processor for executing the operation instruction;
a second processing module (53), configured to adjust, based on the pause state information, a first pause parameter of the operation unit (220) for executing the operation instruction to determine an adjusted second pause parameter; and
a third processing module (54), configured to control, based on the second pause parameter, the operation unit (220) to execute the operation instruction to obtain a processing result corresponding to the to-be-processed feature map.

13. The apparatus according to claim 12, wherein the second processing module (53) comprises a first processing unit (531) and a second processing unit (532),
wherein the first processing unit (531) is configured to determine, based on the pause state information, a first activation operation time period and a first pause time period of the operation unit (220) for executing the operation instruction; and
the second processing unit (532) is configured to adjust the first activation operation time period and the first pause time period according to at least one of a time dimension and a spatial dimension, to obtain an adjusted second activation operation time period and a second pause time period, which serve as the second pause parameter.

14. A computer readable storage medium, **characterized in that** the storage medium stores a computer program for implementing the method for processing a neural network feature map using a neural network processor according to any one of claims 1 to 11.

15. An electronic device (10), **characterized in that** the electronic device comprises:
a processor (11); and
a memory (12) for storing processor-executable instructions, wherein
the processor is configured to read the executable instructions from the memory (12), and execute the instructions to implement the method for processing a neural network feature map using a neural network processor according to any one of claims 1 to 11; or,
the electronic device comprises the apparatus for processing a neural network feature map using a neural network processor according to claim 13.
